# EUROPEAN PATENT SPECIFICATION

(11) **EP 3 952 188 B1**
(45) Date of publication and mention of the grant of the patent: **23.07.2025**
(21) Application number: 20784227.9
(22) Date of filing: 30.03.2020
(51) Int. Cl.: H04L 5/00, H04W 16/14, H04W 24/10, H04W 16/28, H04W 76/19

(54) **WIRELESS LINK STATUS INDICATION REPORTING METHOD AND TERMINAL DEVICE**
VERFAHREN UND ENDGERÄT ZUR MELDUNG DES STATUS EINER DRAHTLOSEN VERBINDUNG
PROCÉDÉ DE RAPPORT D'INDICATION D'ÉTAT DE LIAISON SANS FIL ET DISPOSITIF TERMINAL

(30) Priority: 01.04.2019 CN 201910258345
(43) Date of publication of application: 09.02.2022
(73) Proprietor: VIVO MOBILE COMMUNICATION CO., LTD., Dongguan, Guangdong 523860 (CN)
(72) Inventor: MO, Yitao, Dongguan, Guangdong 523860 (CN)
(74) Representative: Conti, Marco
(86) International application number: PCT/CN2020/082068
(87) International publication number: WO 2020/200166

(56) References cited:
- EP-A1- 3 468 246
- WO-A1-2016/072787
- WO-A1-2017/202339
- CN-A- 107 438 263
- SONY: "Considerations on initial access and mobility for NR unlicensed operations", vol. RAN WG1, no. Chengdu, China; 20181008 - 20181012, 28 September 2018 (2018-09-28), XP051518040, Retrieved from the Internet <URL:http://www.3gpp.org/ftp/tsg%5Fran/WG1%5FRL1/TSGR1%5F94b/Docs/R1%2D1810634%2Ezip> [retrieved on 20180928]
- VIVO: "Evaluation of the RLM for NR-U", vol. RAN WG2, no. Chengdu, China; 20181008 - 20181012, 28 September 2018 (2018-09-28), XP051523719, Retrieved from the Internet <URL:http://www.3gpp.org/ftp/tsg%5Fran/WG2%5FRL2/TSGR2%5F103bis/Docs/R2%2D1814267%2Ezip> [retrieved on 20180928]
- VIVO: "RAN2 Impacts of RLM for NR-U", vol. RAN WG2, no. Athens, Greece; 20190225 - 20190301, 15 February 2019 (2019-02-15), XP051601639, Retrieved from the Internet <URL:http://www.3gpp.org/ftp/tsg%5Fran/WG2%5FRL2/TSGR2%5F105/Docs/R2%2D1900241%2Ezip> [retrieved on 20190215]
- MEDIATEK INC.: "Discussion on RLM", 3GPP TSG-RAN WG4 MEETING #90 R4-1900794, 1 March 2019 (2019-03-01), XP051605503
- ERICSSON: "Beam management in NR-U", 3GPP TSG-RAN WG4 MEETING #92 R4-1909158, 30 August 2019 (2019-08-30), XP051772053
- ERICSSON: "On RLM in NR-U", 3GPP TSG-RAN WG4 MEETING #92 R4-1909467, 30 August 2019 (2019-08-30), XP051772347

## Description

### TECHNICAL FIELD

Embodiments of this disclosure relate to the communications field, and in particular, to a method for reporting a radio link state indicator, a corresponding terminal device and a corresponding computer-readable storage medium.

### BACKGROUND

Unlicensed bands are one of effective ways to address shortage of spectrum resources for mobile communications networks. Extending the new radio (NR) technology in licensed bands to unlicensed bands can improve the system capacity and performance.

In NR systems, unlicensed bands are mainly the 5 GHz, 37 GHz, and 60 GHz bands. However, devices, such as wireless routers, radar, and Bluetooth devices, with different radio access technologies operate in the unlicensed bands. Therefore, the devices operating on the unlicensed bands need to adopt coordinated contention-based distributed access, such as a "listen before talk" (LBT) procedure. A transmit node (network device or terminal device) that needs to perform data transmission needs to monitor a channel before using an unlicensed band, and can only transmit data when the transmit node detects that the channel has been idle for a specified period of time.

The unlicensed bands are shared bands, a network device may not be able to transmit periodic reference signals in some periods because a channel is busy. In this case, in a radio link measurement process of a terminal device, overheads of inter-layer interaction are large because the terminal device needs to report a state indicator, for example, an out-of-sync (OOS) indicator or beam failure instance (BFI) indicator, in every period. WO2017202339A1 relates to a method for measuring quality of wireless link and terminal. XP51518040A relates to considerations on initial access and mobility for NR unlicensed operations. XP51523719A relates to evaluation of the RLM for NR-U. XP51601639A relates to RAN2 Impacts of RLM for NR-U.

### SUMMARY

The objective of embodiments of this disclosure is to provide a method for reporting a radio link state indicator and a terminal device, so as to resolve a problem that overheads of inter-layer interaction are large because a terminal device needs to report a state indicator in each period. The scope of the present invention is determined only by the scope of the appended claims. More precisely, in one aspect, the present invention provides a method for reporting a radio link state indicator, performed by a terminal device, according to claim 1 and further detailed in the dependent claims referring back to this claim. A corresponding terminal device is provided in claim 7. A corresponding computer-readable storage medium is provided in claim 8.

### BRIEF DESCRIPTION OF DRAWINGS

The drawings described herein are intended for a further understanding of this application and constitute a part of this application. Example embodiments of this application and descriptions thereof are intended to explain this application, and do not constitute any inappropriate limitation on this application. In the accompanying drawings:
FIG. 1 is a schematic flowchart of a method for reporting a radio link state indicator according to an embodiment of this disclosure;
FIG. 2 is a schematic diagram of a method for reporting a radio link state indicator according to an embodiment of this disclosure;
FIG. 3 is a schematic diagram of a method for reporting a radio link state indicator according to another embodiment of this disclosure;
FIG. 4 is a schematic diagram of a method for reporting a radio link state indicator according to still another embodiment of this disclosure;
FIG. 5 is a schematic diagram of a method for reporting a radio link state indicator according to yet another embodiment of this disclosure;
FIG. 6 is a schematic structural diagram of a terminal device according to an embodiment of this disclosure; and
FIG. 7 is a schematic structural diagram of a terminal device according to another embodiment of this disclosure.

### DESCRIPTION OF EMBODIMENTS

To make the objectives, technical solutions, and advantages of this application clearer, the following clearly and completely describes the technical solutions of this application with reference to embodiments of this application and corresponding accompanying drawings. Apparently, the described embodiments are merely some but not all of the embodiments of this application. All other embodiments obtained by a person of ordinary skill in the art based on the embodiments of this application without creative efforts shall fall within the protection scope of this application. The following embodiments 1, 2 and 3 are not according to the invention and are present for illustration purposes only.

It should be understood that the technical solutions in some embodiments of this disclosure may be applied to various communications systems, such as a long term evolution (LTE) system, an LTE frequency division duplex (FDD) system, LTE time division duplex (TDD) system, a universal mobile telecommunications system (UMTS), a worldwide interoperability for microwave access (WiMAX) communications system, a 5G system or in other words, a new radio (NR) system, or a later evolved communications system.

In some embodiments of this disclosure, a terminal device may include but is not limited to a mobile station (MS), a mobile terminal, a mobile telephone, user equipment (UE), a handset, portable equipment, a vehicle, and the like. The terminal device may communicate with one or more core networks via a radio access network (RAN). For example, the terminal device may be a mobile phone (or referred to as a "cellular" phone), or a computer having a wireless communication function. The terminal device may alternatively be a portable, pocket-sized, handheld, computer built-in, or in-vehicle mobile apparatus.

In some embodiments of this disclosure, a network device is an apparatus deployed in a radio access network and configured to provide a wireless communication function for a terminal device. The network device may be a base station. The base station may include a macro base station, a micro base station, a relay station, an access point, and the like in various forms. Devices having base station functions may have different names in systems using different radio access technologies, For example, in an LTE network, the device having the function of the base station is referred to as an evolved NodeB (eNB or eNodeB), in a third generation (3rd Generation, 3G) network, the device having the function of the base station is referred to as a NodeB (Node B), or the device having the function of the base station is referred to as the network device in the later evolved communications system, or the like. However, wording does not constitute a limitation.

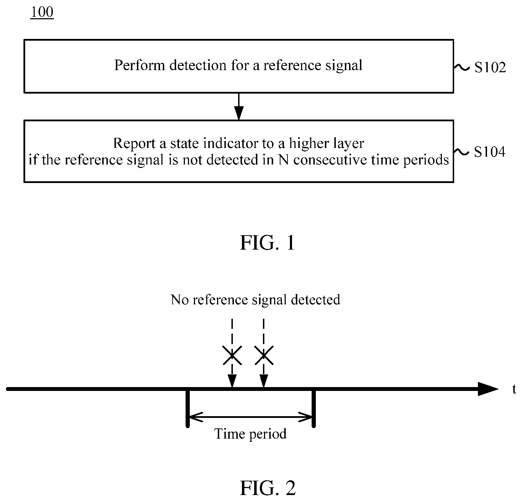

As shown in FIG. 1, an embodiment of this disclosure provides a method for reporting a radio link state indicator 100. The method is performed by a terminal device and includes the following steps.

S102: Perform detection for a reference signal.

Before implementing this embodiment, a network device may configure Y periodic reference signals for a bandwidth part (BWP) of each unlicensed band, so that the terminal device can detect the reference signals in each time period, where Y may be a positive integer such as 1 or 2.

The reference signal may be a channel state information-reference signal (CSI-RS), a synchronization signal block (SSB), or the like.

The performing detection for a reference signal in this step may specifically be performing detection for a signal to interference and noise ratio (SINR), reference signal received power (RSRP), reference signal received quality (RSRQ), a block error rate (BLER), a received signal strength indicator (RSSI), a channel busy ratio (CBR), a channel busy ratio (CBR), channel occupancy (CO), and the like in each time period.

S104: Report a state indicator to a higher layer if the reference signal is not detected in N consecutive time periods.

N is a positive integer and N ≥ (greater than or equal to) 2. For example, N may be 2, or 3, or 4.

That the reference signal is not detected in N consecutive time periods in this step may specifically be that all measured values of the reference signal in the N time periods are less than a preset threshold. Specifically, for example, the network device configures two reference signals in each time period, and in each of the N time periods, measured values of the two reference signals are both less than the preset threshold.

Specifically, in S104, for example, N=3. If the terminal device does not detect the reference signal in three consecutive time periods (which are referred to as a first time period to a third time period), a state indicator is reported in the third time period; and if the reference signal is not detected in next three consecutive time periods (which are referred to as a fourth time period to a sixth time period), a state indicator also needs to be reported in the sixth time period. The subsequent process is similar. No state indicator is reported in the fourth time period and the fifth time period.

Optionally, in the foregoing embodiment, no state indicator is reported to the higher layer if the reference signal is not detected in less than N consecutive time periods. Specifically, as shown in FIG. 2, if the terminal device does not detect the configured two reference signals in one time period, no state indicator is reported to the higher layer. In this embodiment, two reference signals are configured in each time period.

In the present invention, the terminal device performs detection for a reference signal, and reports a state indicator to a higher layer if the reference signal is not detected in N consecutive time periods, where N is a positive integer and N ≥ 2. In some embodiments of this disclosure, full consideration is given to a case in which a network device may not be able to transmit a reference signal in some time periods because a channel is busy, helping to reduce inter-layer interaction.

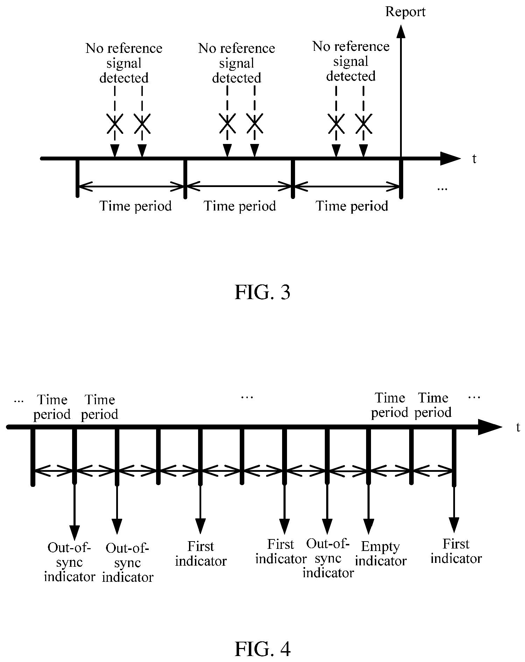

In an embodiment, as shown in FIG. 3, N in this embodiment is 3, two reference signals are configured in each time period, and the terminal device does not detect the configured reference signals in the three consecutive time periods. Therefore, a state indicator is reported to the higher layer.

The foregoing embodiment 100 describes a case in which a state indicator is reported to a higher layer if the reference signal is not detected in N consecutive time periods. The state indicator may be one of the following four:
(1) an out-of-sync (OOS) indicator;
(2) a beam failure instance (BFI) indicator;
(3) a first indicator; and
(4) a second indicator.

The cases of reporting a state indicator are described in different scenarios.

### Embodiment 1 (not covered by the claims)

An out-of-sync (OOS) indicator is reported to the higher layer if all measured values of the reference signal in the N consecutive time periods are less than a first threshold.

### Embodiment 2 not covered by the claims)

An OOS indicator is reported to the higher layer if a measured value of the reference signal in the N consecutive time periods is less than a first threshold but greater than or equal to a second threshold; and
a first indicator is reported to the higher layer if the measured value of the reference signal in the N consecutive time periods is less than the second threshold.

### Embodiment 3 (not covered by the claims)

A beam failure instance (BFI) indicator is reported to the higher layer if a measured value of the reference signal in the N consecutive time periods is less than a third threshold.

### Embodiment 4 (according to the invention)

A BFI indicator is reported to the higher layer if a measured value of the reference signal in the N consecutive time periods is less than a third threshold but greater than or equal to a fourth threshold; and
a second indicator is reported to the higher layer if the measured value of the reference signal in the N consecutive time periods is less than the fourth threshold.

Embodiment 1 and Embodiment 2 may specifically be applied in a radio link monitoring (RLM) scenario. Optionally, if the measured value of the reference signal in an time period is greater than a sixth threshold, an in-sync IS indicator is reported to the higher layer. That the measured value of the reference signal in an time period is greater than a sixth threshold may specifically be that a measured value of any one of multiple reference signals configured for one time period is greater than the sixth threshold.

In Embodiment 1 and Embodiment 2, magnitudes of the thresholds in an ascending order are as follows: the sixth threshold, the first threshold, and the second threshold.

Embodiment 3 and Embodiment 4 are specifically applied in a beam failure detection (BFD) scenario.

The third thresholds in Embodiment 3 and Embodiment 4 may be the same or different. The fourth thresholds in Embodiment 3 and Embodiment 4 may be the same or different.

Embodiment 1 and Embodiment 2 describe two cases of reporting a state indicator. Optionally, in an embodiment, if the reference signal is detected in none of the N consecutive time periods, a physical layer reports a state indicator that may be the first indicator to the higher layer. In this way, the terminal device may further count, at the higher layer, the number of consecutive occurrences of the first indicator, and determine whether to start a radio link monitoring timer T310 based on the number of consecutive occurrences of the first indicator; or check whether a radio link failure (RLF) has occurred. For detailed functions of T310 and RLF, reference may be made to the related art.

Optionally, in the process of counting the number of consecutive occurrences of the first indicator at the higher layer, a target indicator has no effect on the consecutive counting of the first indicator, where the target indicator is an indicator different from the in-sync IS indicator, and may be an OOS indicator, an empty indicator, or the like. For example, the empty indicator mentioned herein may be reported to the higher layer if the measured value of the reference signal in an time period is greater than the first threshold but less than the sixth threshold. Certainly, the empty indicator may also be named in other terms.

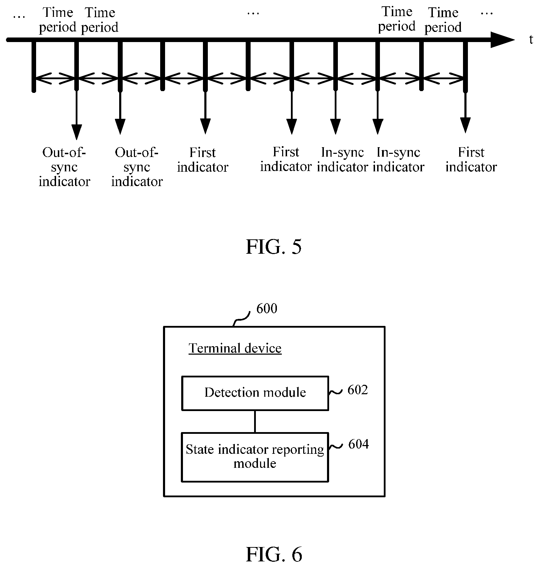

For details, reference may be made to FIG. 4 and FIG. 5. In FIG. 4, the ignored target indicators are an out-of-sync (OOS) indicator and an empty indicator. Therefore, three consecutive occurrences of DL LBT failure indicator are counted in the embodiment of FIG. 4. In FIG. 5, due to the occurrence of the in-sync indicator, two consecutive occurrences of DL LBT failure indicator are counted.

Embodiment 3 and Embodiment 4 describe two cases of reporting a state indicator. If the reference signal is detected in none of the N consecutive time periods, a physical layer reports a state indicator that is the second indicator to the higher layer. In this way, if the second indicator has been received at the higher layer, the terminal device starts or restarts a target timer. During running of the target timer, each time the higher layer receives the second indicator, a count of a target counter is incremented by one counting unit. The count of the target counter is used for determining whether to trigger random access.

Specifically, for example, if the count of the target counter is greater than or equal to a fifth threshold, random access is triggered, or if the count of the target counter is less than a fifth threshold, random access is not triggered.

For the target counter mentioned above, specifically, the count of the target counter may be reset when at least one of the following conditions is met:
(1) that a beam failure detection timer expires;
(2) that a maximum count of beam failure detections is reconfigured;
(3) that the target timer expires;
(4) that on-duration of the target timer is reconfigured;
(5) that the fifth threshold is reconfigured;
(6) that a reference signal detected in S102 is reconfigured; and
(7) that the triggered random access procedure is successfully completed.

Optionally, before the performing detection for a reference signal in S102 in the foregoing multiple embodiments, the following steps may be further included: receiving configuration information; and configuring at least one of the following information based on the configuration information;
the parameter N;
the first threshold;
the second threshold;
the third threshold;
the fourth threshold;
the fifth threshold;
the sixth threshold; and
on-duration of the target timer.

It can be understood that the configuration information is a collective term for various types of configuration information. Certainly, the different information may alternatively be configured through different configuration information. For example, the parameter N may be configured based on first configuration information, the first threshold and the second threshold may be configured based on second configuration information, and so on.

Optionally, at least one of the parameter N, the first threshold, the second threshold, the third threshold, the fourth threshold, the fifth threshold, the sixth threshold, and the on-duration of the target timer may alternatively be prescribed in a protocol.

To describe in detail the method for reporting a radio link state indicator provided in some embodiments of this disclosure, an embodiment is used below for description. The embodiment 200 includes the following steps.

S202: Receive configuration information, and perform related configuration based on the configuration information.

In this embodiment, a network device may broadcast configuration information associated with radio link monitoring (RLM) and beam failure detection (BFD) to a terminal device. The configuration information includes but is not limited to at least one of the following information:
(1) a specific value of several consecutive time periods (for example, n4 represents the natural number 4), or an index of the specific value, where the specific value of several consecutive time periods herein corresponds to the foregoing parameter N.
(2) a threshold for determining that the reference signal is not detected, or an index of the threshold, where the threshold mentioned herein corresponds to the foregoing first threshold, second threshold, third threshold, and fourth threshold;
(3) an RLMBLER pair configuration or an index of the configuration, where the RLM BLER pair configuration includes one or more of a first threshold, second threshold, and sixth threshold for evaluating channel quality, the index is used to indicate the terminal which configuration is to be used, and for example, index 1 indicates that the first configuration is used;
(4) a maximum value of a DL LBT failure counter, which is the fifth threshold mentioned above, where in this embodiment, the DL LBT failure counter corresponds to the foregoing target counter. The DL LBT failure counter is used in conjunction with the following DL LBT failure detection timer, and a count of the DL LBT failure counter is used for determining whether to trigger random access; and
(5) on-duration of a DL LBT failure detection timer, where the DL LBT failure detection timer herein corresponds to the foregoing target timer.

S204: Perform detection for a reference signal.

The terminal device performs at least one of RLM and BFD on a currently activated BWP of a SpCell (primary cell + secondary cell).

S2041: If it is detected that all measured values of the reference signal in less than N consecutive time periods (indication period) are less than a threshold, a physical layer of the terminal device reports no state indicator to a higher layer, as shown in FIG. 2.

The measured value of the reference signal may be SINR, RSRP or RSRQ, BLER, RSSI, CBR, or CO. The threshold is obtained based on a hypothetical physical downlink control channel (PDCCH) transmission parameter.

N is a positive integer and N ≥ (greater than or equal to) 2.

Optionally, in other embodiments, S2041 may be another case such as it is detected that all BLERs of the reference signal in less than N time periods are greater than a preset value.

S2042: If it is detected that all measured values of the reference signal in N consecutive time periods (indication period) are less than a threshold, the physical layer of the terminal device reports an OOS indicator, a BFI indicator, or a DL LBT failure indicator to the higher layer.

For details about which type of state indicator is reported in which case, reference may be made to Embodiment 1 to Embodiment 4 (it is again noted that only embodiment 4 is covered by the claims; all other embodiments are presented for illustration purposes only).

S206: The higher layer (RRC layer) of the terminal device counts the number of consecutive occurrences of DL LBT failure indicator.

This step corresponds to the cases of Embodiment 1 and Embodiment 2, and it is assumed in this step that a first indicator is reported in S2042. In the process of counting the number of consecutive occurrences of the first indicator at the higher layer, a target indicator has no effect on the consecutive counting of the first indicator, where the target indicator may be referred to as a non-in-sync indicator. Any non-in-sync indicator reported by the physical layer has no effect on counting of the number of consecutive occurrences of the first indicator, as shown in embodiments of FIG. 4 and FIG. 5.

S208: Determine whether to trigger a random access procedure.

This step corresponds to the cases of Embodiment 3 and Embodiment 4, and it is assumed in step that a DL LBT failure indicator (corresponding to the foregoing second indicator) is reported in S2042. For a BFD process, if the higher layer of the terminal device receives the DL LBT failure indicator from the physical layer, a DL LBT failure detection timer is started or restarted, and a counter of a DL LBT failure counter is incremented by 1. If the count of the DL LBT failure counter is greater than or equal to a fifth threshold, a random access procedure is triggered in SpCell.

The DL LBT failure detection timer herein corresponds to the foregoing target timer. The DL LBT failure counter corresponds to the foregoing target counter.

Optionally, in this embodiment, the count of the DL LBT failure counter is reset and may specifically be set to 0 when at least one of the following conditions is met:
(1) that a beam failure detection timer beam failure detection timer expires;
(2) that a maximum count of beam failure detections is reconfigured;
(3) that a LBT failure detection timer expires;
(4) that duration of the LBT failure detection timer is reconfigured;
(5) that the fifth threshold is reconfigured;
(6) that a reference signal is reconfigured; and
(7) that the random access procedure is successfully completed.

In some embodiments of this disclosure, the terminal device performs detection for a reference signal, and reports a state indicator to a higher layer if the reference signal is not detected in N consecutive time periods, where N is a positive integer and N ≥ 2. In some embodiments of this disclosure, full consideration is given to a case in which a network device may not be able to transmit a reference signal in some time periods because a channel is busy, helping to reduce inter-layer interaction.

In addition, in some embodiments of this disclosure, the random access procedure may be triggered in SpCell when the count of the LBT failure counter is greater than or equal to the fifth threshold, so as to improve beam pairing between the terminal and the network device, and improve communication efficiency.

The foregoing describes in detail the method for reporting a radio link state indicator according to some embodiments of this disclosure with reference to FIG. 1 to FIG. 5 A terminal device according to some embodiments of this disclosure is described below in detail with reference to FIG. 6.

FIG. 6 is a schematic structural diagram of a terminal device according to some embodiments of this disclosure. As shown in FIG. 6, the terminal device 600 includes:
a detection module 602 that is configured to perform detection for a reference signal; and
a state indicator reporting module 604 that is configured to report a state indicator to a higher layer if the reference signal is not detected in N consecutive time periods, where N is a positive integer and N ≥ 2.

The terminal device performs detection for a reference signal, and reports a state indicator to a higher layer if the reference signal is not detected in N consecutive time periods, where N is a positive integer and N ≥ 2. In some embodiments of this disclosure, full consideration is given to a case in which a network device may not be able to transmit a reference signal in some time periods because a channel is busy, helping to reduce inter-layer interaction.

Optionally, in an embodiment, the state indicator reporting module 604 may further be configured to: reporting no state indicator to a higher layer if the reference signal is not detected in less than N consecutive time periods.

Optionally, in an embodiment not covered by the claims, the state indicator reporting module 604 may further be configured to: report an out-of-sync (OOS) indicator to the higher layer if a measured value of the reference signal in the N consecutive time periods is less than a first threshold; or
report an OOS indicator to the higher layer if a measured value of the reference signal in the N consecutive time periods is less than a first threshold but greater than or equal to a second threshold.

Optionally, in an embodiment not covered by the claims, the state indicator reporting module 604 may further be configured to:
report a first indicator to the higher layer if the measured value of the reference signal in the N consecutive time periods is less than the second threshold.

The state indicator reporting module 604 is further configured to:
according to an example not covered by the claims, report a beam failure instance (BFI) indicator to the higher layer if a measured value of the reference signal in the N consecutive time periods is less than a third threshold; or
according to the invention, report a BFI indicator to the higher layer if a measured value of the reference signal in the N consecutive time periods is less than a third threshold but greater than or equal to a fourth threshold.

The state indicator reporting module 604 is configured to:
report a second indicator to the higher layer if the measured value of the reference signal in the N consecutive time periods is less than the fourth threshold.

Optionally, in an embodiment not covered by the claims, the terminal device 600 further includes a first processing module (not shown in the figure) that may be configured to:
count the number of consecutive occurrences of the first indicator at the higher layer; and
based on the number of consecutive occurrences of the first indicator, determine whether to start a radio link monitoring timer T310 or check whether a radio link failure RLF has occurred.

Optionally, in an embodiment not covered by the claims, in the process of counting the number of consecutive occurrences of the first indicator at the higher layer, a target indicator has no effect on the consecutive counting of the first indicator, where
the target indicator is an indicator different from an in-sync IS indicator.

The terminal device 600 further includes a second processing module (not shown in the figure) that is configured to:
start or restart a target timer if the higher layer receives the second indicator; and
during running of the target timer, increment a count of a target counter by one counting unit each time the higher layer receives the second indicator, where
the count of the target counter is used for determining whether to trigger random access.

Optionally, in an embodiment, the second processing module (not shown in the figure) may further be configured to:
trigger random access if the count of the target counter is greater than or equal to a fifth threshold.

Optionally, in an embodiment, the count of the target counter is reset when at least one of the following conditions is met:
that a beam failure detection timer expires;
that a maximum count of beam failure detections is reconfigured;
that the target timer expires;
that on-duration of the target timer is reconfigured;
that the fifth threshold is reconfigured;
that a reference signal is reconfigured; and
that the random access procedure is successfully completed.

Optionally, in an embodiment, the state indicator includes the first indicator. The terminal device 600 further includes a configuration module (not shown in the figure) that may be configured to:
receive configuration information; and
configure at least one of the following information based on the configuration information;
the parameter N;
the second threshold;
the fourth threshold;
the fifth threshold; and
on-duration of the target timer.

Optionally, in an embodiment, at least one of the following information is prescribed in a protocol:
the parameter N;
the second threshold;
the fourth threshold;
the fifth threshold; and
on-duration of the target timer.

For the terminal device 600 according to some embodiments of this disclosure, reference may be made to the procedures of the method 100 and method 200 corresponding to some embodiments of this disclosure. In addition, the units or modules in the terminal device 600 and the foregoing other operations and/or functions are respectively intended to implement the corresponding procedures in the method 100 and method 200, with the same or equivalent effects achieved. Details are not repeated herein for brevity.

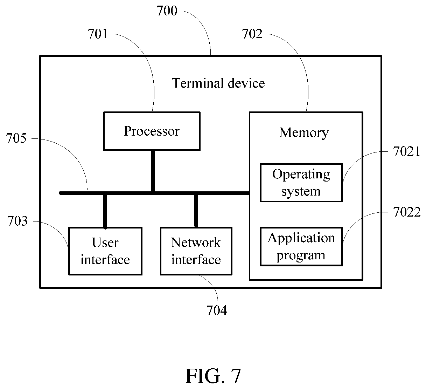

FIG. 7 is a block diagram of a terminal device according to another embodiment of this disclosure. The terminal device 700 shown in FIG. 7 includes at least one processor 701, a memory 702, at least one network interface 704, and a user interface 703. The components in the terminal device 700 are coupled together through a bus system 705. It can be understood that the bus system 705 is configured to implement connection and communication between these components. In addition to a data bus, the bus system 705 further includes a power bus, a control bus, and a state signal bus. However, for clarity of description, various buses are denoted as the bus system 705 in FIG. 7.

The user interface 703 may include a display, a keyboard, a click device (for example, a mouse or a trackball), a touch panel, or a touchscreen.

It can be understood that the memory 702 in some embodiments of this disclosure may be a volatile memory or a non-volatile memory, or may include both a volatile memory and a non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), which is used as an external cache. By way of example but not restrictive description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DRRAM). The memory 702 of the system and the method described in some embodiments of this disclosure is intended to include but not be limited to these and any other applicable types of memories.

In some embodiments, the memory 702 stores the following elements: executable modules or data structures, or a subset thereof, or an extended set thereof: an operating system 7021 and an application program 7022.

The operating system 7021 includes various system programs, such as a framework layer, a core library layer, and a driver layer, for implementing various basic services and processing hardware-based tasks. The application program 7022 includes various application programs, such as a media player and a browser, which are used to implement various application services. A program for implementing the method in some embodiments of this disclosure may be included in the application program 7022.

In some embodiments of this disclosure, the terminal device 700 further includes a computer program stored in the memory 702 and capable of running on the processor 701. When the computer program is executed by the processor 701, the steps of the foregoing method 100 and method 200 are implemented.

The foregoing method disclosed by some embodiments of this disclosure may be applied to the processor 701, or implemented by the processor 701. The processor 701 may be an integrated circuit chip, having a signal processing capability. During implementation, the steps of the foregoing method may be completed by hardware integrated logic circuits in the processor 701 or instructions in the form of software. The foregoing processor 701 may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods, steps, and logical block diagrams that are disclosed in some embodiments of this disclosure. The general-purpose processor may be a microprocessor, or the processor may be any conventional processor or the like. Steps of the methods disclosed with reference to some embodiments of this disclosure may be directly performed and completed by using a hardware decoding processor, or may be performed and completed by using a combination of hardware and a software module in a decoding processor. The software module may be located in a computer-readable storage medium that is mature in the art, such as a random access memory, a flash memory, a read-only memory, a programmable read-only memory or electrically erasable programmable memory, or a register. The computer-readable storage medium is located in the memory 702, and the processor 701 fetches information in the memory 702, and completes the steps of the foregoing method in combination with its hardware. Specifically, the computer-readable storage medium stores a computer program, and when the computer program is executed by the processor 701, the steps of the embodiments of the foregoing method 100 and method 200 are implemented.

It can be understood that the embodiments described in some embodiments of this disclosure may be implemented by hardware, software, firmware, middleware, microcode, or a combination thereof. For hardware implementation, the module, unit, submodule, subunit, and the like may be implemented in one or more application specific integrated circuits (ASIC), digital signal processors (DSP), digital signal processing devices (DSP Device, DSPD), programmable logic devices (PLD), field-programmable gate arrays (FPGA), general-purpose processors, controllers, microcontrollers, microprocessors, and other electronic units for performing the functions described in this application, or a combination thereof.

For software implementation, the techniques described in some embodiments of this disclosure may be implemented by modules (for example, processes and functions) that perform the functions described in some embodiments of this disclosure. Software code may be stored in the memory and executed by the processor. The memory may be implemented in or outside the processor.

The terminal device 700 can implement the processes implemented by the terminal device in the foregoing embodiments, with the same or equivalent effects achieved. To avoid repetition, details are not described herein again.

Some embodiments of this disclosure further provide a computer-readable storage medium that stores a computer program. When the computer program is executed by a processor, the processes of the foregoing method embodiment 100 and method embodiment 200 can be implemented, with the same technical effects achieved. To avoid repetition, details are not described herein again. For example, the computer-readable storage medium is a read-only memory (ROM for short), a random access memory (RAM for short), a magnetic disk, an optical disc, or the like.

It should be noted that the terms "comprise", "include", or any of their variants in this specification are intended to cover a non-exclusive inclusion, such that a process, method, article, or apparatus that includes a list of elements includes not only those elements but also other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the description of the foregoing embodiments, a person skilled in the art can clearly understand that the method in the foregoing embodiments may be implemented by software on a necessary universal hardware platform or by hardware only. Based on such an understanding, the technical solutions of this disclosure essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this disclosure.

## Claims

1. A method for reporting a radio link state indicator, performed by a terminal device, **characterized by** comprising:
performing (S102) detection for a reference signal; and
reporting (S104) a state indicator to a higher layer of the terminal device if the reference signal is not detected in N consecutive time periods, wherein N is a positive integer and N ≥ 2,
the method **characterized in that**
the reporting (S104) a state indicator to a higher layer if the reference signal is detected in N consecutive time periods further comprises:
for a beam failure detection process, reporting a BFI indicator to the higher layer if a measured value of the reference signal in the N consecutive time periods is less than a third threshold but greater than or equal to a fourth threshold, and reporting a second indicator to the higher layer if the measured value of the reference signal in the N consecutive time periods is less than the fourth threshold,
and **in that** the method further comprises:
starting or restarting a target timer if the higher layer receives the second indicator; and
during running of the target timer, incrementing a count of a target counter by one counting unit each time the higher layer receives the second indicator, wherein
the count of the target counter is used for determining whether to trigger random access.

2. The method according to claim 1, wherein
no state indicator is reported to a higher layer if the reference signal is not detected in less than N consecutive time periods.

3. The method according to claim 1, further comprising:
triggering random access if the count of the target counter is greater than or equal to a fifth threshold.

4. The method according to claim 3, wherein the count of the target counter is reset when at least one of the following conditions is met:
that a beam failure detection timer expires;
that a maximum count of beam failure detections is reconfigured;
that the target timer expires;
that on-duration of the target timer is reconfigured;
that the fifth threshold is reconfigured;
that a reference signal is reconfigured; and
that the random access procedure is successfully completed.

5. The method according to claim 3, wherein before the performing (S102) detection for a reference signal, the method further comprises:
receiving configuration information; and
configuring at least one of the following information based on the configuration information;
the parameter N;
the fourth threshold;
the fifth threshold; and
on-duration of the target timer.

6. The method according to claim 3, wherein at least one of the following information is prescribed by a protocol:
the parameter N;
the fourth threshold;
the fifth threshold; and
on-duration of the target timer.

7. A terminal device, comprising a memory, a processor, and a program stored in the memory and capable of running on the processor, wherein when the program is executed by the processor, the steps of the method according to any one of claims 1 to 6 are implemented.

8. A computer-readable storage medium, wherein the computer-readable storage medium stores a computer program, and when the computer program is executed by a processor, the steps of the method according to any one of claims 1 to 6 are implemented.

## Patentansprüche

1. Verfahren zur Meldung eines Funkverbindungs-Status-Indikators, der von einer Endgerätvorrichtung ausgeführt wird, **dadurch gekennzeichnet, dass** es Folgendes umfasst:
Durchführen (S102) einer Detektion für ein Referenzsignal; und
Melden (S104) eines Status-Indikators an eine höhere Schicht der Endgerätvorrichtung, wenn das Referenzsignal in N aufeinanderfolgenden Zeiträumen nicht detektiert wird, wobei N eine positive ganze Zahl ist und N ≥ 2,
wobei das Verfahren **dadurch gekennzeichnet ist, dass** das Melden (S104) eines Status-Indikators an eine höhere Schicht, wenn das Referenzsignal in N aufeinanderfolgenden Zeiträumen detektiert wird, ferner Folgendes umfasst:
für einen Strahlausfalldetektionsprozess, Melden eines BPI-Indikators an die höhere Schicht, wenn ein gemessener Wert des Referenzsignals in den N aufeinanderfolgenden Zeiträumen kleiner als ein dritter Schwellenwert, jedoch größer als oder gleich einem vierten Schwellenwert ist, und Melden eines zweiten Indikators an die höhere Schicht, wenn der gemessene Wert des Referenzsignals in den N aufeinanderfolgenden Zeiträumen kleiner als der vierte Schwellenwert ist,
und dadurch, dass das Verfahren ferner umfasst:
Starten oder Neustarten eines Zielzeitgebers, wenn die höhere Schicht den zweiten Indikator empfängt; und
während der Zielzeitgeber läuft, Inkrementieren eines Zählerstands eines Zielzählers um eine Zähleinheit jedes Mal, wenn die höhere Schicht den zweiten Indikator empfängt, wobei
der Zählerstand des Zielzählers verwendet wird, um zu bestimmen, ob ein Zufallszugriff ausgelöst werden soll.

2. Verfahren nach Anspruch 1, wobei
kein Status-Indikator an eine höhere Schicht gemeldet wird, wenn das Referenzsignal nicht in weniger als N aufeinanderfolgenden Zeiträumen detektiert wird.

3. Verfahren nach Anspruch 1, ferner umfassend:
Auslösen eines Zufallszugriffs, wenn der Zählerstand des Zielzählers größer als oder gleich einem fünften Schwellenwert ist.

4. Verfahren nach Anspruch 3, wobei der Zählerstand des Zielzählers zurückgesetzt wird, wenn mindestens eine der folgenden Bedingungen erfüllt ist:
dass ein Strahlausfalldetektionszeitgeber abläuft;
dass eine maximale Anzahl von Strahlausfalldetektionen neu konfiguriert wird;
dass der Zielzeitgeber abläuft;
dass die Einschaltdauer des Zielzeitgebers neu konfiguriert wird;
dass der fünfte Schwellenwert neu konfiguriert wird;
dass ein Referenzsignal neu konfiguriert wird; und
dass das Zufallszugriff-Verfahren erfolgreich abgeschlossen wurde.

5. Verfahren nach Anspruch 3, wobei das Verfahren vor dem Durchführen (S102) einer Detektion für ein Referenzsignal ferner Folgendes umfasst:
Empfangen von Konfigurationsinformationen; und
Konfigurieren mindestens einer der folgenden Informationen auf Grundlage der Konfigurationsinformationen;
des Parameters N;
des vierten Schwellenwerts;
des fünften Schwellenwerts; und
der Einschaltdauer des Zielzeitgebers.

6. Verfahren nach Anspruch 3, wobei mindestens eine der folgenden Informationen durch ein Protokoll vorgeschrieben ist:
des Parameters N;
des vierten Schwellenwerts;
des fünften Schwellenwerts; und
der Einschaltdauer des Zielzeitgebers.

7. Endgerätvorrichtung, umfassend einen Speicher, einen Prozessor und ein Programm, das in dem Speicher gespeichert ist und auf dem Prozessor ablaufen kann, wobei, wenn das Programm durch den Prozessor ausgeführt wird, die Schritte des Verfahrens nach einem der Ansprüche 1 bis 6 implementiert werden.

8. Computerlesbares Speichermedium, wobei das computerlesbare Speichermedium ein Computerprogramm speichert und wobei die Schritte des Verfahrens nach einem der Ansprüche 1 bis 6 durchgeführt werden, wenn das Computerprogramm von einem Prozessor ausgeführt wird.

## Revendications

1. Procédé de rapport d'un indicateur d'état de liaison radio, exécuté par un dispositif terminal, **caractérisé par le fait qu'**il comprend :
exécuter (S102) la détection d'un signal de référence ; et
rapporter (S104) un indicateur d'état à une couche supérieure du dispositif terminal si le signal de référence n'est pas détecté au cours de N périodes de temps consécutives, dans lequel N est un nombre entier positif et N ≥ 2,
le procédé est **caractérisé en ce que** le rapport (S104) d'un indicateur d'état à une couche supérieure si le signal de référence est détecté au cours de N périodes de temps consécutives comprend en outre :
pour un processus de détection de défaillance de faisceau, rapporter un indicateur BPI à la couche supérieure si une valeur mesurée du signal de référence au cours des N périodes de temps consécutives est inférieure à un troisième seuil mais supérieure ou égale à un quatrième seuil, et rapporter un second indicateur à la couche supérieure si la valeur mesurée du signal de référence au cours des N périodes de temps consécutives est inférieure au quatrième seuil,
et **en ce que** le procédé comprend en outre :
démarrer ou redémarrer un temporisateur cible si la couche supérieure reçoit le second indicateur ; et
pendant le fonctionnement du temporisateur cible, incrémenter un décompte d'un compteur cible d'une unité de comptage chaque fois que la couche supérieure reçoit le second indicateur, dans lequel
le décompte du compteur cible est utilisé pour déterminer s'il faut déclencher l'accès aléatoire.

2. Procédé selon la revendication 1, dans lequel
aucun indicateur d'état n'est rapporté à une couche supérieure si le signal de référence n'est pas détecté pendant moins de N périodes consécutives.

3. Procédé selon la revendication 1, comprenant en outre :
déclencher l'accès aléatoire si le décompte du compteur cible est supérieur ou égal à un cinquième seuil.

4. Procédé selon la revendication 3, dans lequel le décompte du compteur cible est réinitialisé lorsqu'au moins l'une des conditions suivantes est remplie :
un temporisateur de détection défaillance de faisceau expire ;
un décompte maximal de détections de défaillance de faisceau est reconfiguré ;
le temporisateur cible expire ;
une durée active du temporisateur cible est reconfigurée ;
le cinquième seuil est reconfiguré ;
un signal de référence est reconfiguré ; et
la procédure d'accès aléatoire est achevée avec succès.

5. Procédé selon la revendication 3, dans lequel avant d'exécuter (S102) la détection d'un signal de référence, le procédé comprend en outre :
recevoir des informations de configuration ; et
configurer au moins l'une des informations suivantes sur la base des informations de configuration ;
le paramètre N ;
le quatrième seuil ;
le cinquième seuil ; et
une durée active du temporisateur cible.

6. Procédé selon la revendication 3, dans lequel au moins l'une des informations suivantes est prescrite par un protocole :
le paramètre N ;
le quatrième seuil ;
le cinquième seuil ; et
une durée active du temporisateur cible.

7. Dispositif terminal, comprenant une mémoire, un processeur et un programme stocké dans la mémoire et pouvant être exécuté sur le processeur, dans lequel lorsque le programme est exécuté par le processeur, les étapes du procédé selon l'une quelconque des revendications 1 à 6 sont mises en œuvre.

8. Support de stockage lisible par ordinateur, dans lequel le support de stockage lisible par ordinateur stocke un programme informatique, et lorsque le programme informatique est exécuté par un processeur, les étapes du procédé selon l'une quelconque des revendications 1 à 6 sont mises en œuvre.
